# EUROPEAN PATENT APPLICATION

(11) **EP 2 360 107 A1**
(43) Date of publication of application: **24.08.2011**
(21) Application number: 10153676.1
(22) Date of filing: 16.02.2010
(51) Int. Cl.: B65G 1/04

(54) **Method and apparatus for moving rod-shaped stored products**

(71) Applicant: Geri Paolo S.R.L., 31046 Oderzo (Treviso) (IT)
(72) Inventor: Geri, Paolo, 31046, ODERZO (TREVISO) (IT)
(74) Representative: Feltrinelli, Secondo Andrea

(57) **Abstract**

There is described a method for moving rod-shaped industrial products (20) stored in vertical position, and a device for carrying out the method.
The method implies the steps of (i) transferring a product (20) from the storage point in a collecting carriage (30) keeping the product substantially with the longitudinal axis vertical or slightly inclined, and (ii) keeping the products transferred into the carriage in a substantially vertical or slightly inclined position.

## Description

### TECHNICAL FIELD OF THE INVENTION

The present invention relates to a method and an apparatus for implementing it, for moving rod-shaped stored industrial products.

### PRIOR ART

Iron metallurgy products shaped as a rod or with an elongated shape, such as rods, pipes, rods, section rods or the like, hereinafter globally referred to as "rods", generally come out of the foundry and are delivered to a wholesaler, who stores them to subsequently sell them.

Due to the scarce movement and/or to the limited spaces, in the first storage systems at the beginning of the century the rods were placed vertically on support frames, see for example GB 869 195, and hence laid or moved manually once they were to be put on sale. Rods are heavy and long products (up to 6m), almost always stored in packs, so the difficulty and hazard of a manual movement of a vertical rod or of the pack (which may crush people and/or fall violently and get damaged) may well be understood.

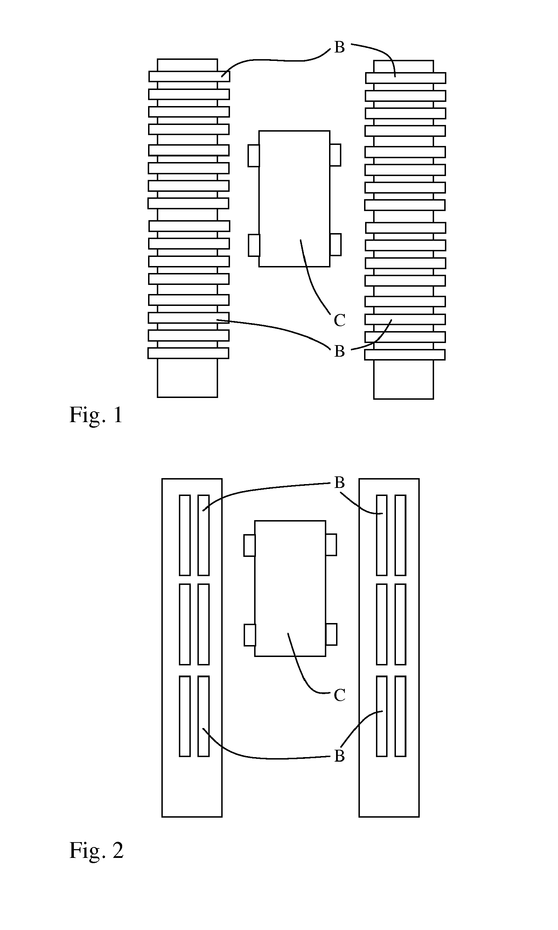

The more modern systems, due to the wider range of profiles offered and to the more widespread handling, provide for a horizontal storage of the rods on superimposed shelves for limiting the overall space occupied at various heights, such as is for example disclosed in EP 0 542 245 and DE 42 24 208, and the aid of gripping and transport carriages for the rods and/or of overhead travelling cranes. The rods, reference letter B in fig. 1 and 2, are stored parallel to one another and placed in rows, with either their end (fig. 1) or their long side (fig. 2) placed in direction of carriages C.

The problems of these systems are several, among which:
- the large waste of surface used for the warehouse, as it depends on the longitudinal size of the rods;
- the very long time spent for preparing a job order that comprises different types of rods: they must be taken one by one from the relevant shelf, removed therefrom, lowered on the carriage or hooked to a travelling crane, moved onto a working plane and then tied together;
- the extended use of expensive labour in the above operations.

### OBJECTS OF INVENTION

The main object of the invention is to improve the prior art by a method and an apparatus for moving stored products with a tubular and/or rod shape, either metal or not, which have not the above drawbacks.

Such objects are achieved by a method for moving rod-shaped industrial products stored in vertical position,
characterised by
(i) transferring a product from the storage point in a collecting carriage keeping the product substantially with the longitudinal axis vertical or slightly inclined,
(ii) keeping the products transferred into the carriage in a substantially vertical or slightly inclined position.

The storage and movement of the rods always in vertical allows saving in terms of cost and space, as explained hereinafter.

As variants of the method, the following steps may be carried out either alone or in combination:
- transferring a product to the collecting carriage with a rotation of the product about the lower resting end thereof (simple and not energetically burdensome operation);
- at the end of said rotation or after another movement, the upper end of the product is made to rest onto the carriage, and at this support point the product is lifted and is laid substantially vertical or slightly inclined on a carriage transport plane;
- after said lifting, it is waited for the product to place substantially vertical under the gravity force action, using the downward attraction thereof;
- the product rotation about the resting lower end thereof is carried out, preferably manually, pushing the upper end of the product (simple and little burdensome operation);
- after having transferred a desired amount of products on the carriage, they are packed or directly bound thereon (packaging convenience);
- after having loaded the carriage, it is tilted in horizontal position to move the product contents to substantially horizontal position to be unloaded (utmost simplicity of unload and transport of the packaged products, without dispersion). The method of the invention may be carried out by special machines, for example a collecting carriage adapted for handling the industrial products which may have a containment structure for the products adapted for keeping the products substantially with the longitudinal axis vertical or slightly inclined, and actuating means adapted for allowing the carriage movement. This allows the movement of the products always in a vertical orientation.

In the preferred versions, the carriage may comprise:
- means for gripping one or more stored products and laying them into the containment structure with longitudinal axis vertical or slightly inclined (utmost automation);
- means for imparting to a stored product a rotation about the resting lower end thereof so as to bring it closer (the rotation is a simple and energetically not burdensome movement);
- means for lifting the upper end of one or more products making them reach a position substantially with vertical longitudinal axis, and means for laying the product on a bottom of said structure (simplicity of laying the products into the carriage);
- a bottom with weighing means for weighing the products loaded onto the carriage (the weighing step may be with the loading one),
- as lifting means: a rotatable member suitable for restingly receiving the upper end of one or more products on a rotating surface thereof, said member integrally comprising elements adapted for retaining said upper end on said surface, so that by rotating together with said member, at least one of said elements lifts a respective resting product. Preferably, the elements adapted for retaining are magnets or equivalent means with actionat a distance;
- adjusting means of the height of the rotatable member relative to the containment structure, for adapting the carriage to any product size;
- adjusting means of the attraction force of the magnets, for adapting the carriage to any product size;

The invention further relates to a warehouse arrangement for storing rod-shaped industrial products stored in vertical position, implementing the method and using the machines for performing it. In particular, an arrangement comprising compartments wherein products are stored in vertical position and one or more carriages and collecting and handling machines according to what described herein.

The machines or carriages may be configured for moving linearly in front of the compartments along a same direction, and/or surpassing an adjacent carriage for reaching distant compartments, and/or going round a group of compartments for reaching the opposite side.

This ensures the efficiency of the warehouse and quick order fulfilment.

In particular, it is preferred to make a raised structure or platform positioned around or close to the compartments so that an operator may manually move the upper ends of the products.

### BRIEF DESCRIPTION OF THE DRAWINGS

Further features and advantages of the invention will appear more clearly from the exemplary description of the method, and of an apparatus for implementing it, along with the annexed drawings, wherein:
figures 1 and 2 show a simplified plan view of known warehouse arrangements;
figure 3 shows a side view of stored rods according to the invention and of a transport carriage;
figure 4 shows a plan view of the loaded carriage;
figure 5 shows a side view of the carriage in two operating configurations;
figure 6 shows a schematic plan view of a warehouse arrangement according to the invention.

### EMBODIMENTS OF THE INVENTION

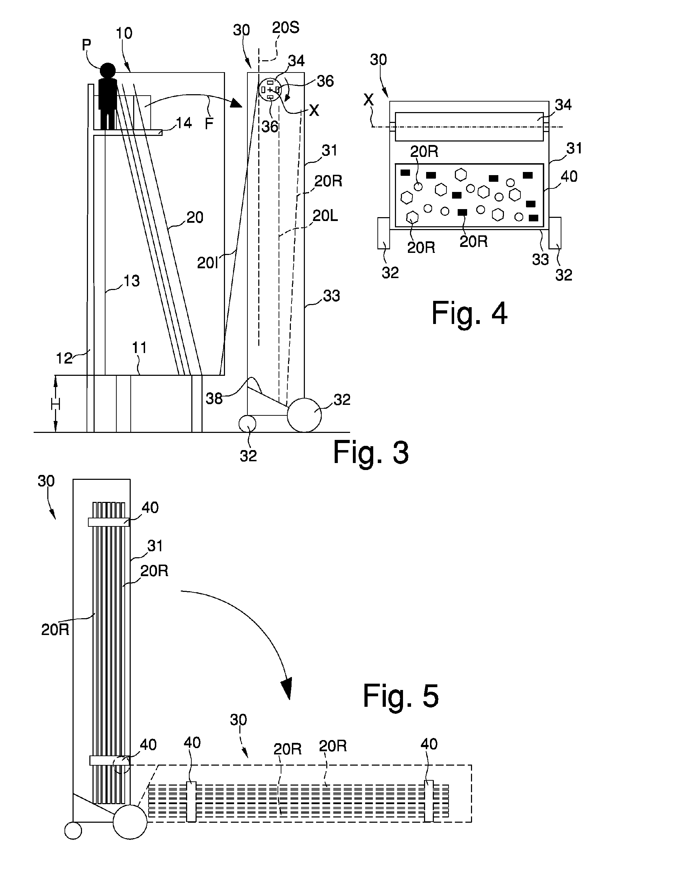

Figure 3 shows a set of rods 20 (of the same type and size) stored vertically in a shelf 10 (also called "box"). Of course the rods 20 will remain resting on the vertical back wall 13 of the shelf 10, or to the wall, if the shelf 10 is open at the back or only consisting of vertical partitions. In any case, in the shelf 10 there may be a safety barrier (not shown) for preventing the outward slipping of the base of rods 20 too much inclined.

In the proximity of shelf 10 there is a lattice 12 which has a suspended footpath 14 whereon an operator may step up and reach (at arm's length) the upper end of the rods 20. The shelf 10 has a bottom 11, whereon the lower ends of the rods 20 rest, placed at a certain height H from the ground.

Fig. 3 also shows a transport carriage 30, formed by a vertical parallelepiped structure 31 which is about as high as the shelf 10 and movable on wheels 32, preferably steering. Other sliding means may also be used, such as tracks or rails. Preferably, the carriage 30 is provided with motor means, so as to move autonomously without external thrust.

A cylinder 34 with horizontal axis X is turnably mounted in a controlled manner on top and inside the structure 31. The cylinder 34 is provided with magnets 36 arranged around axis X with constant angular pitch, preferably with radiused symmetry, that is, they are angularly spaced by portions with no attraction function.

In order to move the rods 20, for example when an order pack must be prepared, the necessary rods are transferred from one or more shelves 10 to the carriage (or more carriages) 30, keeping them substantially in a vertical plane.

Preferably, an operator stays on the footpath 14 moving next to the rod 20 to be loaded. Then, he/she pushes the upper end thereof towards carriage 30 making it rotate (arrow F in fig. 1) about the resting lower end thereof (see reference rod 20I). In general, it is sufficient for the operator to move or bring the rod to be loaded close to the rotating cylinder 34.

In any case, also other means may be used for moving the rod 20, for example a mechanical arm connected to the shelf or mounted on carriage 30. With special means, the rod 20 may even be stiffly lifted and shifted towards the cylinder 34, or also directly laid into the carriage 30. It is understood that if the invention is applied to non iron metallurgy products, the magnetic attraction means are not suitable. Then, it is possible, for example for relieving the operator's stress, to also provide for gripping means for pulling and/or taking up a rod 20.

At the end of the movement, the upper end of the rod 20 rests on the cylinder 34.

Of course, to this end, axis X of the cylinder 34 will be positioned at a suitable height, preferably mounting it on vertical position adjusting means , in order to adapt the functionality of the carriage 30 to rods of a different length.

When the rod 20I rests on the cylinder 34, it is made to rotate so that the magnets 36 that are closer to the rod 20I move along an ascending arch. In this way, at least one of the magnets 36 passing near the rod 20I will attract it, keeping the contact by a certain arch of rotation on the cylinder 34, with the result that the rod 20I is lifted and by gravity the lower end, after a light oscillation, will set to vertical position (see rod 20S). The cylinder 34 may also stop to wait for any residual oscillations of the rod 20S to dampen.

By rotating the cylinder 24 again, the magnet 36 that retained the rod 20S suspended moves away, and the rod 20S drops into carriage 30 (see rod 20L) up to touching a plate 38 thereof, which for example acts as bottom or base.

The attraction force of the magnets 36 is preferably adjustable (by known methods and means). Such adjustment is advantageous for two reasons:
1) by decreasing a too strong attraction, the rod 20S is prevented from remaining hooked to the cylinder 34 and rising again; moreover, instead of dropping, the rod 20S may be attracted by the magnet 36 which follows the one that is currently acting;
2) different forces are required for lifting rods of different size and weight. Preferably, the plate 38 is not horizontal but inclined inwards of carriage 30, so that the rod 20L is forced, after landing, to tilt towards a rear wall 33 of the carriage 30. Also in this case, a small containment barrier may be provided for preventing the drop or the slipping of the rod 20R outside the carriage 30.

The bottom 38 may advantageously serve as weighing system or means, providing it with pressure or weight sensors. It is therefore possible to control the weight of the rods making up the load of the carriage 30 and for example, a sales order, preventing a subsequent weighing step (long and expensive).

Preferably, the rods 20R loaded on carriage 30 are fixed to one another, for example by a strap 40 as in fig. 4, directly into the carriage 30. The fixing into vertical position and in the carriage 30 is more effortless and is not complicated by the weight of the rod pack as in the horizontal position.

The loaded carriage 30 is then moved to the unloading zone, and here it is overturned to the horizontal position (fig. 5) for unloading the packs already ready for shipping.

It should be noted that the height difference H between the shelf 10 and the carriage 30 for the drop of the rod 20 may be compensated, or in any case is not influential to the invention. For example, the height difference H may be obviated by wheels 32 of the carriage 30 so as to lift it. Or H may be zero, and the carriage 30 may have a bottom 38 virtually at the ground level.

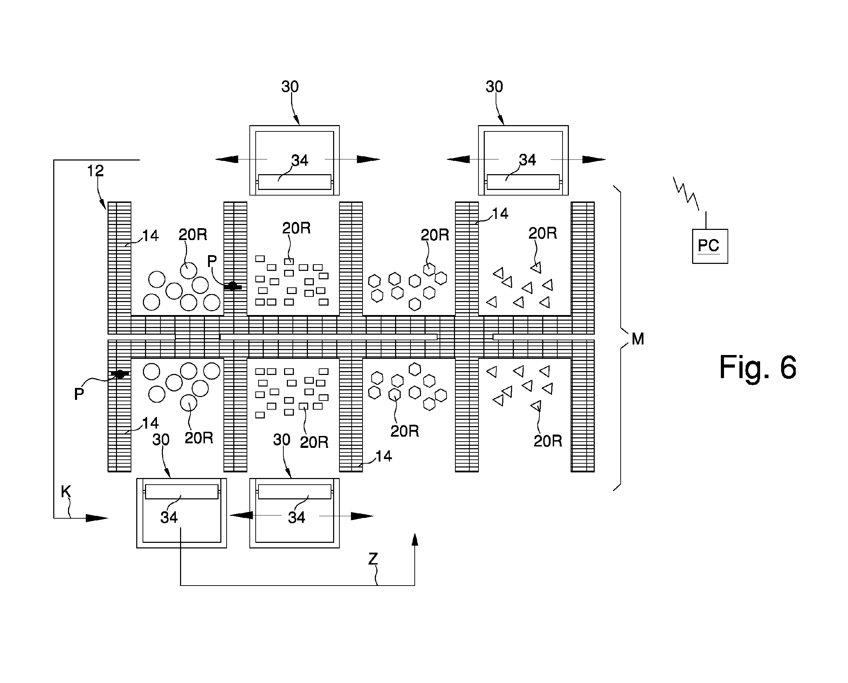

Fig. 6 shows a top view of a storage warehouse M organised according to the invention. The various types of rods (indicated with different geometrical shapes) are vertically stored into compartments, or separated by partitions (as a shelf 10) or only by a series of suspended footpaths 14 communicating with one another. One or more operators P may thus move close to any type of rod and push it or move it manually into a carriage 30 or, for example, supervise and/or manage the transfer thereof assisted by gripping and translation means.

More than one carriage 30 may serve the warehouse M. Carriages 30 are preferably autonomous in the movements and control, and may operate at the same time for loading the rods 20R.

For example, the movement of the carriages 30 may be controlled directly by a computer PC that manages the loading of customer orders. The computer PC sends the carriages 30 to the various boxes (through commands by radio or cable), and the operator or operators P must only move the required number of rods. For example, display means (screens or displays), located on the carriage 30 and controlled by the computer PC, indicate what and where to load.

The carriages 30 may move on rail or wheels, with a movement logic excluding as much as possible any slowing down and collisions at the loading places. For example, the carriages 30 may be programmed or may be fitted with guides with switches so that they
- move linearly in front of the warehouse or compartments containing rods along a same direction,
- overtake an adjacent carriage (see trajectory Z) to reach distant rods, and
- go round a warehouse island to reach the opposite side (see trajectory K).
   It is seen that the invention achieves the intended objects as it reduces the time for preparing the material (moving vertically-placed rods is quicker, those of one work order may be grouped together, and the step of collecting the rods, even more time-consuming, is avoided);
- it reduces the material packaging and weighing errors as 1) often the operator, in picking up the various packs prepared along the warehouse by the bridge crane, forgets some of them; and 2) the pack is weighed en bloc, with all the sizes loaded before, and then the single weights and types are divided in relation to the theoretical weights;
- it reduces the costs for constructing the warehouses to store the material (the warehouses may be smaller in terms of area and may only consist of supports for the rods, optionally covered from rain or sun, instead of huge structures capable of carrying the weight of the bridge crane and of the relevant loads).

## Claims

1. Method for moving rod-shaped industrial products (20) stored in vertical position, **characterised by**
(i) transferring a product (20) from the storage point in a collecting carriage (30) keeping the product substantially with the longitudinal axis vertical or slightly inclined,
(ii) keeping the products transferred into the carriage in a substantially vertical or slightly inclined position.

2. Method according to claim 1, wherein a product is transferred to the collecting carriage with a rotation (F) of the product about the resting lower end thereof.

3. Method according to claim 2, wherein the upper end of the product (20) is made to rest onto the carriage (30), and at this resting point the product (20S) is lifted and is laid substantially vertical or slightly inclined on a carriage transport plane (38).

4. Method according to claim 3, wherein after said lifting, it is waited for the product (20S) to place substantially vertical under the gravity force action.

5. Method according to any one of the previous claims from 2 to 4, wherein the product rotation about the resting lower end thereof is carried out manually pushing the upper end of the product.

6. Method according to any one of the previous claims, wherein after having transferred a desired amount of products on the carriage, they are packed or directly tied thereon.

7. Method according to any one of the previous claims, wherein after having loaded the carriage, it is tilted in horizontal position to move the product contents to substantially horizontal position to be unloaded.

8. Collecting carriage (30) for moving rod-shaped industrial products stored in vertical position according to the method of the previous claims, **characterised in that** it comprises
- a containment structure (31) for the products, adapted for keeping the products substantially with longitudinal axis vertical or slightly inclined;
- actuating means (32) for allowing the movement of the carriage.

9. Carriage according to claim 8, comprising means for gripping one or more stored products and laying them into the containment structure with longitudinal axis vertical or slightly inclined.

10. Carriage according to claim 8 or 9, comprising means for imparting to a stored product a rotation about the resting lower end thereof in order to bring it closer.

11. Carriage according to any one of claims 8 to 10, comprising means for lifting the upper end of one or more products making them reach a position substantially with vertical longitudinal axis, and means for laying the product on a bottom of said structure.

12. Carriage according to claim 11, wherein said bottom comprises weighing means for weighing the products loaded on the carriage.

13. Carriage according to claim 11 or 12, wherein said lifting means comprise a rotatable member adapted for restingly receiving the upper end of one or more products on a rotating surface thereof, said member integrally comprising elements adapted for retaining said upper end on said surface, so that by rotating together with said member, at least one of said elements lifts a respective resting product.

14. Warehouse arrangement for storing rod-shaped industrial products stored in vertical position, **characterised in that** it comprises
compartments to store the products in vertical position,
one or more collecting and moving carriages according to one of claims 8 to 13.

15. Warehouse arrangement according to claim 14, comprising a raised structure or platform positioned around or close to the compartments so that an operator may manually move the upper ends of the products.
